# Europäisches Patentamt
# European Patent Office
# Office européen des brevets

(19)

(11) Numéro de publication : **0 174 883**
**B1**

(12) **FASCICULE DE BREVET EUROPÉEN**

(45) Date de publication du fascicule du brevet :
09.11.88

(51) Int. Cl.⁴ : **H 02 K 5/167**, H 02 K 13/00,
H 02 K 5/14

(21) Numéro de dépôt : **85401530.2**

(22) Date de dépôt : **24.07.85**

(54) **Moteur électrique, notamment pour groupe moto-ventilateur.**

(30) Priorité : **01.08.84 FR 8412221**

(43) Date de publication de la demande :
**19.03.86 Bulletin 86/12**

(45) Mention de la délivrance du brevet :
**09.11.88 Bulletin 88/45**

(84) Etats contractants désignés :
**DE GB IT**

(56) Documents cités :
**BE-A- 679 604**
**FR-A- 1 195 185**
**FR-A- 1 278 714**
**FR-A- 1 498 229**
**FR-A- 1 535 130**
**US-A- 2 468 844**

(73) Titulaire : **ECIA - EQUIPEMENTS ET COMPOSANTS POUR L'INDUSTRIE AUTOMOBILE**

**F-25400 Audincourt (Doubs) (FR)**

(72) Inventeur : **Juglair, Antoine**
**86bis rue du Vernois**
**F-25400 Valentigney (FR)**

(74) Mandataire : **Moncheny, Michel et al**
**c/o Cabinet Lavoix 2 Place d'Estienne d'Orves**
**F-75441 Paris Cedex 09 (FR)**

EP 0 174 883 B1

## Description

La présente invention est relative aux moteurs électriques, notamment pour des groupes moto-ventilateurs tels que, par exemple, ceux destinés à la ventilation d'un moteur à combustion interne d'un véhicule automobile.

On connaît un dispositif dans lequel un moteur électrique comprend une culasse équipée sur chacune de ses faces d'un flasque moulé dans un alliage tel que du zamac. A l'intérieur du boîtier formé par la culasse et les flasques, un arbre solidaire en rotation d'un rotor et d'un collecteur tourillonne d'une part au voisinage de son extrémité fixée à une hélice dans un roulement porté par un flasque et d'autre part, à son extrémité opposée, dans un coussinet porté par l'autre flasque. Par ailleurs, la culasse est équipée, sur sa périphérie intérieure d'un stator, en regard du rotor et une plaque porte-balais sous la forme d'un sous-ensemble complet est disposée entre le flasque, opposé à l'hélice, et la culasse de sorte que les balais sollicités chacun par un ressort en direction du collecteur coopèrent avec ce dernier. La plaque porte-balais est constituée d'une plaque sur laquelle sont sertis des guides-balais en laiton, la distribution de l'électricité pour alimenter les balais se faisant au moyen de pistes en laiton formées sur la plaque. Enfin, l'assemblage du dispositif est assuré par des tirants qui rapprochent et solidarisent les flasques, la plaque porte-balais et la culasse étant insérées entre ces derniers. Ce dispositif qui d'une part fait appel à un roulement et à un coussinet pour supporter l'hélice à rotation et qui d'autre part utilise une plaque portebalais dont les conducteurs électriques sont réalisés sous la forme de pistes de conduction en laiton, entraîne, du fait du nombre et de la nature des éléments, un prix de revient élevé et un encombrement axial important.

Le document FR 1 498 229 propose un moteur électrique à blindage hermétiquement clos pour entraîner des compresseurs de groupe frigorifique. Ce document vise à résoudre le problème du centrage statique relatif du rotor par rapport au stator dans le cas où l'arbre vertical du moteur doit transformer une rotation continue en translation oscillatoire par un système bielle-manivelle. Ce moteur comprend une culasse en forme de cloche à la périphérie intérieure de laquelle est disposé, partiellement un stator et au centre de laquelle est assujetti un palier dirigé vers l'intérieur, et un rotor fixé sur la périphérie extérieure d'un manchon solidaire en rotation d'un arbre engagé dans ce palier.

Le document BE 679 604 concerne un moteur électrique de petites dimensions pour des usages non spécifiés et vise plus spécialement la constitution d'un rotor. Ce document traite tout particulièrement d'un collecteur plat obtenu par photogravure sous la forme d'un disque mince comprenant un support isolant qui est appliqué à plat contre un paquet de tôles qui sert de support aux enroulements et qui est monté sur un manchon creux solidaire de l'arbre du moteur.

Afin de remédier à ces inconvénients, la présente invention a pour but de fournir un moteur électrique compact et dont le petit nombre d'éléments et la matière dans laquelle ils peuvent être réalisés permettent un montage simple et contribuent à un faible coût de fabrication.

A cet effet, l'invention a pour objet un moteur électrique dont la structure d'ensemble est exposée dans le préambule de la revendication principale.

Les particularités spécifiques au moteur électrique selon l'invention ressortent de la partie caractérisante de la revendication principale notamment.

D'autres caractéristiques et avantages de l'invention apparaîtront à la lecture de la description, d'une forme de réalisation qui va suivre, donnée uniquement à titre d'exemple et faite en référence aux dessins annexés, sur lesquels :

- la Fig. 1 est une vue en coupe longitudinale partielle d'un ventilateur équipé d'un moteur électrique conforme à l'invention ;

- la Fig. 2 est une vue en plan partielle du ventilateur de la Fig. 1, à plus petite échelle, le couvercle du support de balais étant enlevé pour faire apparaître ces derniers et leur connexion ; et

- la Fig. 3 est une vue en coupe suivant la ligne 3-3 de la Fig. 2, à plus grande échelle, le couvercle du support de balais étant en place.

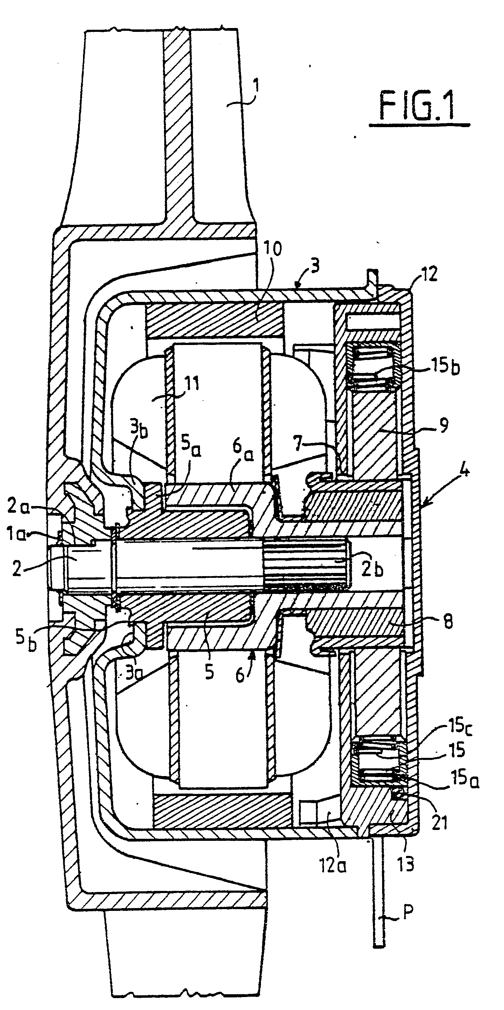

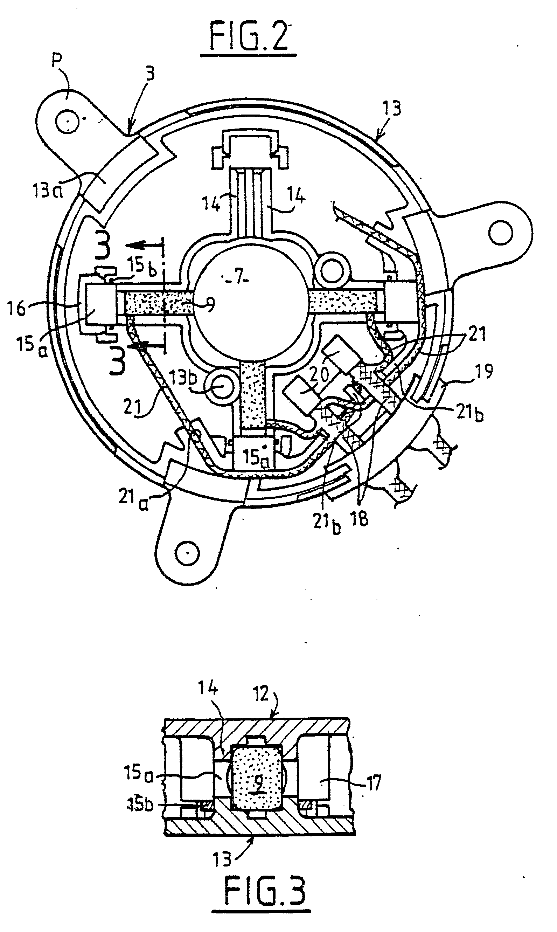

Le ventilateur représenté sur les Fig. 1 et 2 comporte une hélice 1 solidaire en rotation d'un arbre 2 d'un moteur électrique conforme à l'invention. L'hélice 1 est calée sur l'arbre 2 à l'aide d'un méplat 2a formé sur son extrémité qui se prolonge à l'extérieur du moteur et est fixée de manière indémontable par une bague de retenue 1a de type connu.

Le moteur électrique proprement dit comporte une culasse 3 en forme de cloche munie de pattes de fixation P et dont le fond est orienté vers l'hélice 1, sa face ouverte recevant un support 4 de balais qui sera décrit en détail dans la suite.

Conformément à l'invention, l'arbre 2 tourillonne dans un coussinet 5 fixé par sertissage au niveau d'une partie 3a centrale rentrante prévue sur le fond de la culasse 3. A cet effet, le coussinet est muni au voisinage de son extrémité orientée vers la culasse 3 d'une saillie 5a circulaire sur laquelle repose un rebord 3b de la partie 3a rentrante, ce rebord étant maintenu sur le coussinet 5 à l'aide d'une lèvre 5b annulaire venue de matière avec le coussinet 5 par sertissage.

Par ailleurs, entre le coussinet 5 et le support 4 de balais, l'arbre 2 est solidaire en rotation, à l'aide de cannelures 2b, d'un manchon 6 qui pénètre dans une ouverture 7 centrale du support 4 de balais et qui porte un collecteur 8 de telle façon que ce dernier puisse coopérer avec des balais 9 disposés à la périphérie de l'ouverture 7. En outre, le manchon 6 se prolonge par une partie de section élargie 6a qui porte, en regard d'un stator 10 équipant la culasse 3, un rotor 11, et à l'intérieur de laquelle le coussinet vient se loger, sa saillie 5a étant adjacente à l'extrémité de la partie de section élargie 6a du manchon 6. On voit que dans une telle disposition, le coussinet 5 est situé dans la région du centre de gravité du rotor, ce qui permet le guidage de l'arbre 2 par un palier unique tout en évitant des vibrations de l'hélice 1 hors de son plan de rotation.

En se référant à nouveau aux Fig. 1 et 2, on peut voir que le support 4 de balais comprend un couvercle 12 muni de moyens de fixation de celui-ci sur la culasse 3 et une plaque support 13 maintenue entre la culasse 3 et le couvercle 12.

Les moyens de fixation du couvercle 12 comprennent trois pattes 12a (Fig. 1) qui pénètrent chacune dans une encoche 13a (Fig. 2) formée à la périphérie extérieure de la plaque support 13 pour venir s'enclencher élastiquement dans des cavités (non représentées) prévues sur la périphérie intérieure de la culasse 3. De plus, deux trous 13b sont formés sur la face de la plaque support 13 en regard du couvercle 12 afin de recevoir des pions (non représentés) prévus sur ce dernier et repérer ainsi la position relative du couvercle 12 par rapport à la plaque support 13 au moment de l'assemblage final du moteur.

Les balais 9, régulièrement répartis suivant des rayons autour de l'ouverture 7 qui débouche entre la plaque support 13 et le couvercle 12, sont disposés chacun dans deux paires de glissières 14 parallèles venues de matière avec la plaque de support 13 pour la première paire et, en regard de la première, avec le couvercle 12 pour la seconde (Fig. 2 et 3).

Chaque balai 9 est sollicité en direction du collecteur 8 par un ressort 15 disposé dans un boîtier 15a à peu près parallélépipédique et muni d'une face ouverte, orientée vers le balai 9, par laquelle le ressort 15 se détend pour coopérer avec le balai 9 correspondant. Chaque boîtier 15a est immobilisé en arrière des balais 9 au moyen de nervures saillantes 16 venues de matière avec le couvercle 12 et la plaque support 13, ces nervures 16 étant adaptées à la forme des boîtiers 15a.

Par ailleurs, les boîtiers 15a sont pourvus chacun de moyens de libération automatique des ressorts 15 qui permettent de placer au montage les boîtiers 15a avec le ressort 15 comprimé dans chacun d'eux pour ne libérer ces derniers qu'au moment de l'assemblage définitif, évitant ainsi les problèmes délicats bien connus de leur mise en place simultanée sans dispositif particulier.

Ces moyens de libération automatique comportent pour chaque boîtier 15a une tige 15b disposée au voisinage de la face ouverte et parallèlement à celle-ci, ses extrémités se prolongeant de part et d'autre du boîtier 15a (Fig. 3) et coulissant dans des encoches 15c, parallèles à la face ouverte et formées en regard l'une de l'autre sur une paire de faces adjacentes à ladite face ouverte (Fig. 1). De plus, des pions 17 (Fig. 3) venus de matière avec le couvercle 12 sont prévus pour coopérer avec chaque extrémité des tiges 15b qui font saillie hors du boîtier 15a afin de libérer le ressort 15 correspondant par la mise en place du couvercle 12.

Les brins d'un câble d'alimentation électrique pénètrent dans le moteur entre le couvercle 12 et la plaque support 13 par l'intermédiaire d'un passefil 19 qui est retenu élastiquement, de manière connue en soi, dans une ouverture ménagée sur la périphérie de la plaque support 13. Les brins 18 sont fixés sur des bornes 20, solidaires de la plaque support 13 à partir desquelles le courant électrique est amené aux balais 9 au moyen de fils de connexion 21.

La réalisation du couvercle 12 et de la plaque support 13 en matière plastique permet avantageusement de former des couloirs 21a et des languettes 21b (Fig. 1 et 2), venus de matière, pour guider de manière bien définie les fils 21 de connexion des balais 9 sur la surface de la plaque support 13 qui est en regard du couvercle 12 tout en isolant les fils 21 qui sont d'une polarité différente.

Un tel moteur électrique qui ne fait appel qu'à un palier unique pour guider et supporter l'arbre permet une diminution notable de son encombrement axial, ce qui s'avère particulièrement avantageux dans certaines applications où l'arbre doit être très court telle que, par exemple, la ventilation d'un moteur à combustion interne d'un véhicule automobile. Par ailleurs, la réalisation du support de balais en matière plastique et l'emploi d'une culasse en forme de cloche qui se substitue à la culasse classique et à son flasque avant réduit le nombre et le coût de fabrication des pièces et donc le prix de revient du moteur.

**Revendications**

1. Moteur électrique de motoventilateur à hélice pour automobile comportant une culasse (3) en forme de cloche à la périphérie intérieure de laquelle est disposé un stator (10) et au centre de laquelle est assujetti un palier (5) dirigé vers l'intérieur, un rotor (11) fixé sur la périphérie extérieure d'un manchon (6) qui entoure une portion de ce palier et qui est solidaire en rotation d'un arbre (2) engagé dans ce palier et d'un collecteur (8), des balais (9) qui sont sollicités chacun par un ressort (15) en direction du collecteur (8) caractérisé en ce que le palier (5) porte au voisinage de son extrémité orientée vers la culasse une saillie (5a) circulaire appliquée à l'intérieur de la cloche à proximité de son centre, en ce que le collecteur (8) est fixé sur le manchon (6) solidaire en rotation de l'arbre, en ce que le manchon comporte une partie (6a) de section élargie dont l'extrémité est proche de la saillie (5a) et qui porte le rotor (11) et dans laquelle vient se loger cette portion du palier (5) de manière que le centre de gravité de l'ensemble de la partie tournante du moteur soit situé dans la zone de ce palier.

2. Moteur suivant la revendication 1, caractérisé en ce que le palier (5) et l'arbre (2) qui y est engagé sont horizontaux.

3. Moteur suivant la revendication 1 ou 2, caractérisé en ce que la culasse (3) englobe la totalité du stator (10).

4. Moteur suivant l'une quelconque des revendications 1 à 3, caractérisé en ce que le palier (5) comporte un coussinet autolubrifié.

5. Moteur suivant l'une quelconque des revendications 1 à 4, caractérisé en ce que le palier (5) comporte au voisinage de son extrémité proche de la saillie (5a) une lèvre (5b) annulaire venue de matière avec le palier (5) et en ce que la culasse (3) présente un rebord (3a) qui est emprisonné entre saillie (5a) et lèvre (5b) après sertissage de cette dernière.

6. Moteur suivant l'une quelconque des revendications 1 à 5, caractérisé en ce que le collecteur (8) est cylindrique et les balais (9) sont radiaux et en ce que les balais sont montés sur un support (12, 13) centré sur l'arbre (2) et disposé sur une face de la culasse (3).

7. Moteur suivant l'une quelconque des revendications précédentes, caractérisé en ce que les ressorts (15) sont montés comprimés chacun dans un boîtier (15a) muni d'au moins une face ouverte et de moyens de libération automatique du ressort (15) lors du montage du moteur.

8. Moteur suivant la revendication 7, caractérisé en ce que les moyens de libération comprennent une tige (15b) disposée au voisinage de la face ouverte du boîtier (15a) et transversalement à celle-ci afin d'emprisonner le ressort dans le boîtier, les extrémités de la tige se prolongeant de part et d'autre à l'extérieur de ce dernier et coulissant dans des encoches (15c), parallèles à la face ouverte, formées sur une paire de faces opposées et adjacentes à cette dernière.

9. Moteur suivant la revendication 7 ou 8, caractérisé en ce que le support de balais comporte un couvercle (12) muni de moyens de fixation de celui-ci sur la culasse (3) et une plaque support (13), munie d'un orifice central (7) de passage du collecteur (8), destinée à être maintenue entre la culasse (3) et le couvercle (12), et en ce que le couvercle (12) et la plaque support (13) comportent des moyens de guidage des balais et des moyens d'immobilisation des boîtiers (15a) de ressort (15).

10. Moteur suivant la revendication 9, caractérisé en ce que les moyens de fixation du couvercle (12) sur la culasse (3), la plaque support (13) étant interposée entre ces derniers, comprennent plusieurs pattes élastiques (12a) disposées à la périphérie du couvercle (12) et orientée axialement vers l'intérieur du moteur et des encoches (13a) formées à la périphérie extérieure de la plaque support (13) pour ménager un passage à chaque patte élastique (12a) du couvercle, ces dernières venant s'enclencher élastiquement dans des cavités prévues sur la périphérie intérieure de la culasse (3).

11. Moteur suivant la revendication 9 ou 10, caractérisé en ce que les moyens de guidage des balais (9) comprennent pour chaque balai (9) deux paires de glissières (14) parallèles, dont une est prévue sur la plaque support (13) et l'autre, en regard de la première, sur le couvercle (12).

12. Moteur suivant la revendication 11, caractérisé en ce que les moyens d'immobilisation des boîtiers (15a) de ressort (15) comprennent pour chaque boîtier (15a) des nervures (16) en saillie adaptées à la forme du boîtier (15a) et disposées radialement à l'extérieur des glissières (14) sur la plaque support (13) et le couvercle (12).

13. Moteur suivant l'une quelconque des revendications 8 à 11, caractérisé en ce que les moyens de libération automatique des ressorts sont actionnés au cours du montage par des pions (17) prévus sur le couvercle (12), ces pions (17) étant disposés de telle façon que chacun de ceux-ci coopère avec les extrémités de la tige (15b) qui se prolongent à l'extérieur des boîtiers (15a) afin de libérer les ressorts par la mise en place du couvercle (12).

14. Moteur suivant l'une quelconque des revendications 9 à 13, caractérisé en ce que le couvercle (12) est muni de pions destinés à s'emboîter dans des trous (13b) prévus sur la face en regard du couvercle (12), de la plaque support (13) afin de repérer la position relative du couvercle (12) par rapport à la plaque support (13) au cours du montage.

15. Moteur suivant l'une quelconque des revendications 9 à 14, caractérisé en ce que la plaque support (13) est munie de languettes (21b) et de couloirs (21a) pour guider les fils (21) de connexion des balais (9) à partir de ces derniers jusqu'aux brins (18) d'un câble d'alimentation auquel ils sont reliés.

16. Moteur suivant les revendications 9 à 15, caractérisé en ce que le couvercle (12) et la plaque support (13) sont en matière plastique moulée, et en ce que les moyens de fixation du couvercle (12) sur la culasse (13), les moyens de guidage (14) des balais, les moyens d'immobilisation (16) des boîtiers (15a) de ressort (15), les pions (17) agissant sur les moyens de libération automatique des ressorts (15), les pions de repérage de position du couvercle (12) et les languettes (21b) et couloirs (21a) de guidage des fils (21) de connexion des balais (9) sont venus de matière.

17. Groupe moto-ventilateur, caractérisé en ce qu'il comprend une hélice (1) solidaire en rotation de l'arbre (2) d'un moteur électrique suivant l'une quelconque des revendications 1 à 16.

**Claims**

1. Electric motor of a bladed electric fan for a car, having a yoke (3) in the shape of a bell, at the inside periphery of which there is arranged a stator (10) and at the centre of which there is secured a bearing (5) directed towards the inside, a rotor (11) fixed to the outside periphery of a sleeve (6) which surrounds a section of this bearing and which is fixed in rotation with a shaft (2) engaged in this bearing and with a collector (8), brushes (9) which are each urged by a spring (15) in the direction of the collector (8), characterized in that the bearing (5) carries, in the vicinity of its end oriented towards the yoke, a circular projection (5a) bearing against the inside of the bell close to its centre, in that the collector (8) is fixed to the sleeve (6) fixed in rotation with the shaft, in that the sleeve has a part (6a) of widened section, of which the end is close to the projection (5a) and which carries the rotor (11), and in which this section of the bearing (5) is mounted such that the centre of gravity of the rotating part of the motor as a whole is situated in the zone of this bearing.

2. Motor according to Claim 1, characterized in that the bearing (5) and the shaft (2) engaged in it are horizontal.

3. Motor according to Claim 1 or 2, characterized in that the yoke (3) encloses the entire stator (10).

4. Motor according to any one of Claims 1 to 3, characterized in that the bearing (5) has a self-lubricating bearing.

5. Motor according to any one of Claims 1 to 4, characterized in that the bearing (5) has, in the vicinity of its end close to the projection (5a), an annular lip (5b) in one piece with the bearing (5), and in that the yoke (3) has a flange (3a) which is confined between projection (5a) and lip (5b) after crimping of the latter.

6. Motor according to any one of Claims 1 to 5, characterized in that the collector (8) is cylindrical and the brushes (9) are radial, and in that the brushes are mounted on a support (12, 13) centred on the shaft (2) and arranged on one face of the yoke (3).

7. Motor according to any one of the preceding claims, characterized in that the springs (15) are each mounted, compressed, in a casing (15a) provided with at least one open face and with means of automatically releasing the spring (15) when the motor is assembled.

8. Motor according to Claim 7, characterized in that the releasing means comprise a rod (15b) arranged in the vicinity of the open face of the casing (15a) and transversely with respect to the latter, in order to confine the spring in the casing, the ends of the rod extending on either side outside the latter and sliding in notches (15c) which are parallel to the open face and are formed in a pair of faces opposite and adjacent to the latter.

9. Motor according to Claim 7 or 8, characterized in that the brush support has a cover (12) provided with means of fixing the latter to the yoke (3) and a support plate (13) which is provided with a central orifice (7) for the passage of the collector (8) and is intended to be held between the yoke (3) and the cover (12), and in that the cover (12) and the support plate (13) have means for guiding the brushes and means for holding the spring (15) casings (15a) stationary.

10. Motor according to Claim 9, characterized in that the means of fixing the cover (12) to the yoke (3), where the support plate (13) is placed between these, comprise several resilient lugs (12a) arranged at the periphery of the cover (12) and oriented axially towards the inside of the motor and notches (13a) formed in the outside periphery of the support plate (13) to make a passage for each resilient lug (12a) of the cover, these last latching resiliently into cavities provided in the inside periphery of the yoke (3).

11. Motor according to Claim 9 or 10, characterized in that the means of guiding the brushes (9) comprise, for each brush (9), two pairs of parallel slides (14), of which one is provided on the support plate (13) and the other, opposite the first, is provided on the cover (12).

12. Motor according to Claim 11, characterized in that the means of holding the spring (15) casings (15a) stationary comprise, for each casing (15a), projecting ribs (16) matched to the shape of the casing (15a) and arranged radially outside the slides (14) on the support plate (13) and the cover (12).

13. Motor according to any one of Claims 8 to 11, characterized in that the means of automatically releasing the springs are actuated during assembly by pins (17) provided on the cover (12), these pins (17) being arranged such that each of them cooperates with the ends of the rod (15b), which extend outside the casings (15a) in order to release the springs by putting the cover (12) in position.

14. Motor according to any one of Claims 9 to 13, characterized in that the cover (12) is provided with pins intended to fit into holes (13b) provided on the opposite face of the cover (12) and the support plate (13) in order to set the relative position of the cover (12) with respect to the support plate (13) during assembly.

15. Motor according to any one of Claims 9 to 14, characterized in that the support plate (13) is provided with tabs (21b) and passages (21a) to guide the wires (21) for connecting the brushes (9) from the latter as far as the ends (18) of a supply cable to which they are connected.

16. Motor according to Claims 9 to 15, characterized in that the cover (12) and the support plate (13) are of moulded plastics material, and in that the means for fixing the cover (12) to the yoke (3), the means (14) for guiding the brushes, the means (16) for holding the spring (15) casings (15a) stationary, the pins (17) acting on the means of automatically releasing the springs (15), the pins for setting the position of the cover (12) and the tabs (21b) and passages (21a) for guiding the wires (21) for connecting the brushes (9) are in one piece.

17. Electric fan unit, characterized in that it comprises a propeller (1) fixed in rotation with the shaft (2) of an electric motor according to any one of Claims 1 to 16.

**Patentansprüche**

1. Elektromotor für Schraubenlüfter für Kraftfahrzeuge mit einem glockenförmigen Joch (3), an dessen innerem Umfang ein Stator (10) angeordnet ist und in dessen Mitte ein nach innen gerichtetes Lager (5) befestigt ist, einem am äußeren Umfang einer einen Teil dieses Lagers umgebenden und sich mit einer in dieses Lager eingeschobenen Welle (2) und einem Kommutator (8) zusammen drehenden Hülse (6) befestigten Rotor (11) und Bürsten (9), die jeweils durch eine Feder (15) in Richtung des Kommutators (8) gedrückt werden, dadurch gekennzeichnet, daß das Lager (5) im Bereich seines zum Joch gerichteten Endes einen im Inneren der Glocke in der Nähe von deren Mitte aufgesetzten kreisförmigen Ansatz (5a) trägt, daß der Kommutator (8) auf der sich mit der Welle drehenden Hülse (6) befestigt ist, daß die Hülse einen Teil (6a) mit erweitertem Querschnitt aufweist, dessen Ende sich nah am Ansatz (5a) befindet und der den Rotor (11) trägt und in dem dieser Bereich des Lagers (5) so zu liegen kommt, daß der Schwerpunkt des gesamten sich drehenden Teils des Motors im Bereich dieses Lagers liegt.

2. Motor nach Patentanspruch 1, dadurch gekennzeichnet, daß das Lager (5) und die in es eingeschobene Welle (2) waagerecht sind.

3. Motor nach Patentanspruch 1 oder 2, dadurch gekennzeichnet, daß das Joch (3) den gesamten Stator (10) umgibt.

4. Motor nach irgendeinem der Patentansprüche 1 bis 3, dadurch gekennzeichnet, daß das Lager (5) ein selbstschmierendes Wellenlager aufweist.

5. Motor nach irgendeinem der Patentansprüche 1 bis 4, dadurch gekennzeichnet, daß das Lager (5) benachbart zu seinem dem Ansatz (5a) nahen Ende eine ringförmige, aus dem Material des Lagers (5) geformte Lippe (5b) und daß das Joch (3) eine Kante (3a) aufweist, die zwischen dem Ansatz (5a) und der Lippe (5b) nach deren Einbördelung eingefaßt ist.

6. Motor nach irgendeinem der Patentansprüche 1 bis 5, dadurch gekennzeichnet, daß der Kommutator (8) zylindrisch ist und die Bürsten (9) radial sind und daß die Bürsten auf einem um die Welle (2) zentrierten und auf einer Seite des Jochs (3) angeordneten Träger (12, 13) angebracht sind.

7. Motor nach irgendeinem der vorhergehenden Patentansprüche, dadurch gekennzeichnet, daß die Federn (15) jeweils in einem mit mindestens einer offenen Seite und mit Mitteln zur automatischen Freigabe der Feder (15) bei der Montage des Motors ausgestatteten Gehäuse (15a) zusammengedrückt montiert sind.

8. Motor nach Patentanspruch 7, dadurch gekennzeichnet, daß die Mittel zur Freigabe einen in der Nähe der offenen Seite des Gehäuses (15a) und quer zu diesem angeordneten Stift (15b) aufweisen, um die Feder in dem Gehäuse festzuhalten, wobei sich die Endstücke des Stifts nach beiden Seiten außerhalb des Gehäuses fortsetzen und in in einem Paar von zu der offenen Seite parallelen, einander gegenüberliegenden und an diese angrenzenden Flächen ausgebildeten Kerben (15c) verschiebbar sind.

9. Motor nach Patentanspruch 7 oder 8, dadurch gekennzeichnet, daß der Bürstenträger aus einem mit Mitteln zu seiner Befestigung auf dem Joch (3) versehenen Deckel (12) und einer mit einer zentralen Öffnung (7) zum Durchlassen des Kommutators (8) versehenen Trägerplatte (13), die dazu bestimmt ist, zwischen dem Joch (3) und dem Deckel (12) gehalten zu werden, besteht, und daß der Deckel (12) und die Trägerplatte (13) Mittel zum Führen der Bürsten und Mittel zum Festsetzen der Gehäuse (15a) der Federn (15) aufweisen.

10. Motor nach Patentanspruch 9, dadurch gekennzeichnet, daß die Mittel zur Befestigung des Deckels (12) auf dem Joch (3), zwischen welchen letzteren die Trägerplatte (13) eingesetzt ist, aus mehreren elastischen, auf der Peripherie des Deckels (12) angeordneten und axial zum Inneren des Motors gerichteten Krallen (12a) und aus in der äußeren Peripherie der Trägerplatte (13) zum Durchlassen jeder elastischen Kralle (12a) des Deckels ausgebildeten Nuten (13a) bestehen, wobei die Krallen elastisch in in der inneren Peripherie des Jochs (3) vorgesehene Öffnungen einklinken.

11. Motor nach Patentanspruch 9 oder 10, dadurch gekennzeichnet, daß die Mittel zum Führen der Bürsten (9) für jede Bürste (9) aus zwei Paar parallelen Gleitschienen (14) bestehen, von denen eine auf der Trägerplatte (13) und die andere, der ersten gegenüber, auf dem Deckel (12) vorgesehen ist.

12. Motor nach Patentanspruch 11, dadurch gekennzeichnet, daß die Mittel zum Festsetzen der Gehäuse (15a) der Federn (15) für jedes Gehäuse (15a) aus herausragenden, der Form des Gehäuses (15a) angepaßten und radial außerhalb der Gleitschienen (14) auf der Trägerplatte (13) und dem Deckel (12) angeordneten Rippen (16) bestehen.

13. Motor nach irgendeinem der Patentansprüche 8 bis 11, dadurch gekennzeichnet, daß die Mittel zur automatischen Freigabe der Federn bei der Montage durch auf dem Deckel (12) vorgesehene Stücke (17) betätigt werden, die so angeordnet sind, daß jedes von ihnen mit den Endstücken des Stiftes (15b), die sich außerhalb der Gehäuse (15a) fortsetzen, zusammenarbeitet, um die Federn durch das Einsetzen des Deckels (12) freizugeben.

14. Motor nach irgendeinem der Patentansprüche 9 bis 13, dadurch gekennzeichnet, daß der Deckel (12) mit Stücken versehen ist, die dazu bestimmt sind, in an der dem Deckel (12) gegenüberliegenden Seite der Trägerplatte (13) vorgesehene Löcher (13b) einzugreifen, um für die Montage die Stellung des Deckels (12) relativ zur Trägerplatte (13) zu markieren.

15. Motor nach irgendeinem der Patentansprüche 9 bis 14, dadurch gekennzeichnet, daß die Trägerplatte (13) mit Läppchen (21b) und Kanälen (21a) zum Führen der Anschlußdrähte (21) der Bürsten (9) von diesen bis zu den Adern (18) eines Versorgungskabels, mit denen sie verbunden sind, versehen ist.

16. Motor nach Patentanspruch 9 bis 15, dadurch gekennzeichnet, daß der Deckel (12) und die Trägerplatte (13) aus gegossenem Plastik bestehen, und daß die Mittel zur Befestigung des Deckels (12) am Joch (3), die Mittel zum Führen (14) der Bürsten, die Mittel zum Festsetzen (16) der Gehäuse (15a) der Federn (15), die auf die Mittel zur automatischen Freigabe der Federn (15) wirkenden Stücke (17), die Stücke zum Markieren der Position des Deckels (12) und die Läppchen (21b) und Kanäle (21a) zum Führen der Anschußdrähte (21) der Bürsten (9) angeformt sind.

17. Lüftersatz, dadurch gekennzeichnet, daß er eine sich mit der Welle (2) eines Elektromotors nach irgendeinem der Patentansprüche 1 bis 16 drehende Schraube (1) enthält.

**0 174 883**

## FIG.1

## FIG.2

## FIG.3

2